(19) Europäisches Patentamt

European Patent Office

Office européen des brevets

(11) **EP 2 588 925 B1**

(12) **EUROPÄISCHE PATENTSCHRIFT**

(45) Veröffentlichungstag und Bekanntmachung des Hinweises auf die Patenterteilung:
**10.08.2016 Patentblatt 2016/32**

(21) Anmeldenummer: **11728823.3**

(22) Anmeldetag: **27.06.2011**

(51) Int Cl.:
**G05B 13/04** (2006.01)　　**F22B 35/18** (2006.01)
**F01K 3/22** (2006.01)

(86) Internationale Anmeldenummer:
**PCT/EP2011/060696**

(87) Internationale Veröffentlichungsnummer:
**WO 2012/000929 (05.01.2012 Gazette 2012/01)**

(54) **VERFAHREN UND VORRICHTUNG ZUR ERMITTLUNG VON MODELLPARAMETERN ZUR REGELUNG EINES DAMPFKRAFTWERKSBLOCKS, REGELEINRICHTUNG FÜR EINEN DAMPFERZEUGER UND COMPUTERPROGRAMMPRODUKT**

METHOD AND DEVICE FOR DETERMINING MODEL PARAMETERS FOR CONTROLLING A STEAM POWER PLANT BLOCK, CONTROL UNIT FOR A STEAM GENERATOR AND COMPUTER PROGRAM PRODUCT

PROCÉDÉ ET DISPOSITIF POUR DÉTERMINER DES PARAMÈTRES DE MODÈLE SERVANT À LA RÉGULATION D'UN BLOC DE CENTRALE À VAPEUR, UNITÉ DE RÉGULATION POUR UN GÉNÉRATEUR DE VAPEUR ET PRODUIT DE PROGRAMME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.07.2010 DE 102010025916**

(43) Veröffentlichungstag der Anmeldung:
**08.05.2013 Patentblatt 2013/19**

(73) Patentinhaber: **Siemens Aktiengesellschaft 80333 München (DE)**

(72) Erfinder: **WENDELBERGER, Klaus 68789 St. Leon-Rot (DE)**

(56) Entgegenhaltungen:
**WO-A1-2008/046894　　WO-A2-2009/156299**
**DE-A1- 3 133 222　　DE-A1- 4 405 350**
**US-A- 5 486 995**

EP 2 588 925 B1

**Beschreibung**

Verfahren und Vorrichtung zur Ermittlung von Modellparametern zur Regelung eines Dampfkraftwerksblocks, Regeleinrichtung für einen Dampferzeuger und Computerprogrammprodukt

Die Erfindung betrifft ein Verfahren zur Ermittlung von Modellparametern zur Regelung eines Dampfkraftwerksblocks und eine entsprechende Vorrichtung gemäß dem Oberbegriff von Anspruch 1. Die Erfindung betrifft ferner eine Regeleinrichtung für einen Dampferzeuger und ein Computerprogrammprodukt.

In der Regelung von Dampfkraftwerksblöcken werden modellgestützte Verfahren eingesetzt. Auf Basis der verwendeten Modelle werden Zeitverläufe insbesondere für die Sollwerte von Kessel- und Turbinenleistung stets so berechnet, dass der Kraftwerksblock in den verschiedenen Betriebsarten ein möglichst optimales Betriebsverhalten aufweist. Zusätzlich vorhandene Korrekturregler gleichen eventuell vorhandene Modellungenauigkeiten aus.

Die Bestimmung der Modellparameter ist mit einem hohen Aufwand verbunden. Außerdem verändern Kraftwerksblöcke ihr zeitliches Verhalten über die Zeit infolge von Verschmutzung, Verschleiß, Brennstoffwechsel o.ä. Dies führt dazu, dass die Modellungenauigkeiten größer werden und die Regelgüte abnimmt.

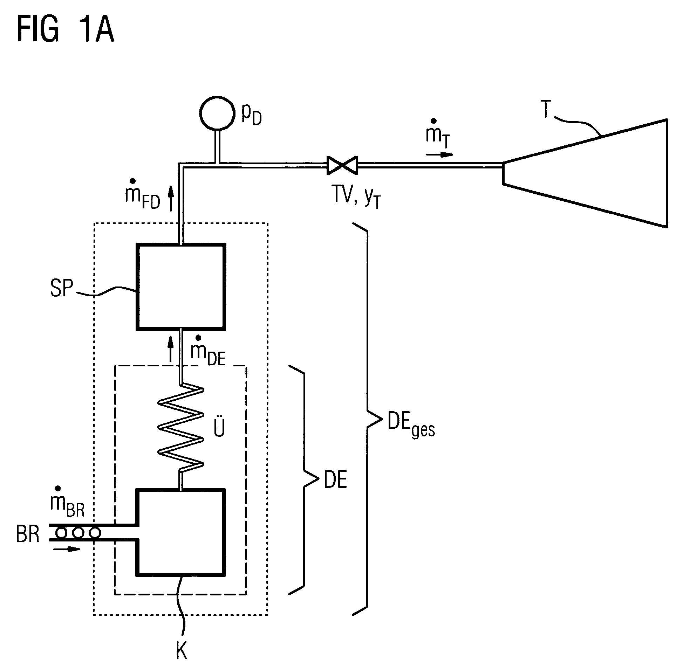

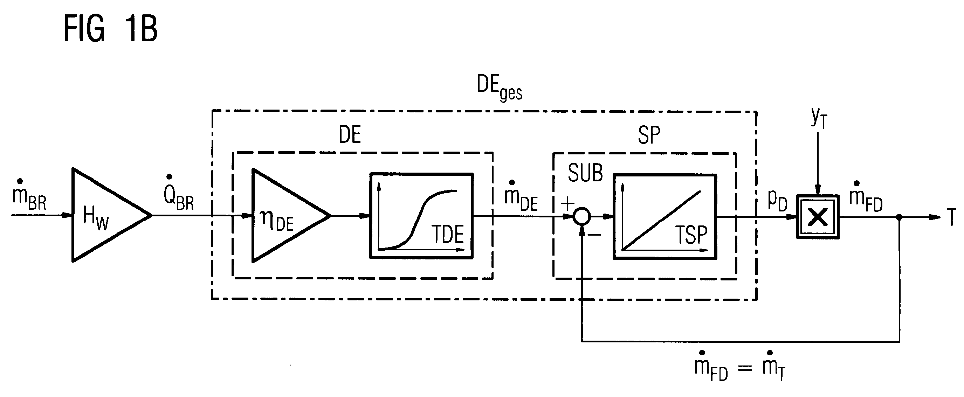

Zu den wichtigsten Modellparametern der Regelung eines Kraftwerksblocks gehören die Kesselzeitkonstante und die Speicherzeitkonstante. Zur Erklärung dieser beiden Konstanten wird auf die Beschreibung der Figur 1 verwiesen.

Die Ermittlung der beschriebenen Modellparameter ist von entscheidender Bedeutung für die Regelung eines Kraftwerksblocks. Üblicherweise wird für beide Parameter von konstanten Werten ausgegangen, die zuvor empirisch bestimmt wurden. Alternativ können für verschiedene Blocklasten Messungen für die beiden Parameter durchgeführt werden, so dass während des Anlagenbetriebs ein lastabhängiges Nachführen der Zahlenwerte durchgeführt werden kann. Der Aufwand zur Inbetriebsetzung der Blockregelung ist dann entsprechend hoch, einer Abnahme der Regelgüte über die Zeit wird nicht entgegengewirkt.

Eine erste Verbesserung wird durch ein Verfahren erreicht, das unter der Annahme einer bekannten Speicherzeitkonstante die Kesselzeitkonstante online abschätzt. Dieses Verfahren auf der Basis einer Parameteridentifikation ist in der europäischen Patentanmeldung PCT/EP2007/061170 beschrieben. Der Nachteil dieser Vorgehensweise liegt jedoch darin, dass immer noch ein Wert für die Speicherzeitkonstante vorgegeben werden muss. Der Aufwand zur Messung der Speicherzeitkonstanten kann somit nicht vermieden werden. Außerdem schlagen sich Ungenauigkeiten der Speicherzeitkonstanten unmittelbar in Ungenauigkeiten für den Schätzwert der Kesselzeitkonstanten nieder. Damit kann eine Abnahme der Regelqualität über der Zeit immer noch nicht ausgeschlossen werden. Ein weiterer Nachteil dieses Verfahrens besteht darin, dass der Brennstoffmassenstrom als Eingangsgröße des Systems betrachtet wird, dessen Dynamik zu ermitteln ist. Für eine korrekte Ermittlung der Kesselzeitkonstanten muss der Algorithmus daher auch den Heizwert des Brennstoffs als weitere unbekannte Größe, für die ein Schätzwert zu ermitteln ist, betrachten.

Es ist Aufgabe der vorliegenden Erfindung, ein Verfahren anzugeben, das all diese Nachteile überwindet und mit dessen Hilfe zumindest ein Modellparameter bei Aufrechterhaltung einer hohen Regelqualität über die Zeit im Online-Betrieb kontinuierlich an das tatsächliche Anlagenverhalten angepasst werden kann. Es ist ferner Aufgabe der vorliegenden Erfindung, eine entsprechende Vorrichtung anzugeben, welche die Durchführung des erfindungsgemäßen Verfahrens ermöglicht. Eine weitere Aufgabe der Erfindung besteht darin, eine Regeleinrichtung anzugeben, welche den ermittelten zumindest einen Modellparameter der Regelstrecke verwendet. Es soll ferner ein Computerprogrammprodukt angegeben werden.

Diese Aufgaben werden durch die Merkmale der unabhängigen Patentansprüche gelöst. Vorteilhafte Ausgestaltungen sind jeweils in den abhängigen Patentansprüchen wiedergegeben.
Die Erfindung ermöglicht vorteilhaft eine Online-Ermittlung von zumindest einem Modellparameter des Prozessmodells eines Dampferzeugers. Dabei wird eine regelungstechnische Modellstruktur des Dampferzeugers mit zumindest einem charakteristischen Modellparameter vorgegeben. Als Messwerte werden online Messsignale des Dampferzeugungsprozesses aufgenommen. Gemäß der Erfindung wird der zumindest eine Modellparameter online geschätzt. Dazu wird sowohl dem realen Prozess als auch dem Modell des Dampferzeugers dasselbe Eingangssignal aufgeschaltet. Anschließend wird eine Schätzbarkeitsanalyse durchgeführt, wobei zumindest ein Ausgangssignal jeweils des Prozesses und/oder des Modells oder zumindest ein Eingangssignal durch eine vergleichende Auswertung anhand einer Gradientenanalyse verarbeitet wird. Anhand der Gradientenanalyse werden in einem weiteren Schritt Schätzbereiche definiert, innerhalb derer eine gültige Parameterschätzung möglich ist. Wird die Schätzbarkeit positiv beurteilt, wird der aktuelle Schätzwert des zumindest einen Modellparameters verbessert und weiterhin in einem iterativen Verfahren das Modell mittels des Schätzwertes des zumindest einen Modellparameters angepasst.

Durch das iterative Verfahren wird nicht der Anspruch erhoben, aus einem aktuell vorliegenden Messdatensatz die gesuchten Modellparameter direkt berechnen zu können. Vielmehr wird ermittelt, ob die aktuellen Schätzwerte des zumindest einen Modellparameters zu groß oder zu klein sind. Auf dieser Basis wird dann eine schrittweise Anpassung der Schätzwerte vorgenommen.

Dies bedeutet, dass nun auch die beiden charakteristischen Modellparameter des Dampferzeugerprozesses, die Kesselzeitkonstante und die Speicherzeitkonstante annähernd gleichzeitig online geschätzt werden können. Das Verfahren ist dabei nur auf Messsignale angewiesen, die bei normaler messtechnischer Ausrüstung eines Kraftwerksblocks stets vorhanden sind. Das Schätzverfahren bestimmt somit vorteilhaft aus den leittechnisch verfügbaren Prozessgrößen, kontinuierlich und in Echtzeit, eine Näherung für die unbekannten Dampferzeugermodellparameter. Der Aufwand der Bestimmung der Modellparameter beispielsweise durch Messungen ist reduziert. Der Aufwand zur Inbetriebsetzung der Blockregelung wird ebenfalls reduziert, weil das Verfahren sofort einsatzbereit ist.

In einer ersten Ausführungsvariante wird der Korrekturwert für den aktuellen Schätzwert aus der Analyse des zeitlichen Verlaufs von Prozess- und Modellgrößen gebildet. Im Vergleich zur Prozessgröße schnelle Änderungen der Modellgröße deuten auf zu kleine Schätzwerte der betreffenden Zeitkonstante hin. Im Verhältnis gesehen langsame Änderungen deuten auf zu große Zeitkonstanten hin. Dies hat den Vorteil, dass zeitliche Veränderungen innerhalb des Prozesses ständig erfasst werden und damit einer Verschlechterung der Regelqualität über die Zeit entgegengewirkt wird.

In einer weiteren Ausführungsvariante werden Maximalwerte der Gradienten vorteilhaft in einer Offline-Simulation ermittelt. Dadurch wird eine Entkopplung von einzelnen Programmteilen erreicht. Um die Gradientenanalyse durchführen zu können, muss im Voraus bekannt sein, wie groß die maximalen Gradienten sind, die im Anlagenbetrieb bei den zu untersuchenden Prozessgrößen auftreten. Diese Gradienten-Maximalwerte hängen wiederum von der zu ermittelnden Zeitkonstanten ab. Für die kleinsten und größten zu erwartenden Werte der Zeitkonstante können daher in einer Offline-Simulation die Gradientenwerte ermittelt werden. Im Online-Betrieb werden dann die Gradienten-Maximalwerte weiterverwendet. Durch die Verknüpfung von Online- und Offline-Berechnungen kann eine höhere Flexibilität des erfindungsgemäßen Verfahrens erreicht werden.

In einer weiteren Ausführungsvariante werden Maximalwerte der Gradienten während des Online-Betriebs mit Hilfe linearer Gleichungen aus den aktuellen Schätzwerten für den zumindest einem Modellparameter des regelungstechnischen Modells ermittelt. Dies hat wiederum den Vorteil, dass der Programmfluss nicht durch Einbindung von Offline-Simulationen unterbrochen werden muss.

In einer weiteren Ausführungsvariante werden die Gradienten mit Hilfe von DT-Gliedern mit niedriger Zeitkonstante bestimmt und/oder die Anpassung des zumindest einen Modellparameters mit Hilfe eines Integrators durchgeführt, wobei eine Variation der Zahlenwerte solange durchgeführt wird, wie eine Abweichung der betrachteten Gradienten ansteht. Mittels DT-Gliedern können je nach Reihenschaltung vielfache Differentiationen erreicht werden. Für hinreichend kleine Differentiator-Zeitkonstanten werden die Genauigkeitsanforderungen der Anwendung erfüllt.

In weiteren Ausführungsvarianten werden die regelungstechnische Modellstrukturen des Dampferzeugerprozesses genauer spezifiziert. Als Basismodell dient hierbei eine Struktur, bei welcher die Dampferzeugung mindestens durch ein Verzögerungsglied N-ter Ordnung mit einer charakteristischen Kesselzeitkonstanten und mindestens einen nachgeschalteten Integrator mit einer charakteristischen Speicherzeitkonstanten modelliert wird. Diese Struktur zeichnet sich durch seine Einfachheit aus, da es vorteilhaft nur aus Basiselementen zusammengesetzt ist. Gleichzeitig handelt es sich hierbei um ein Modell, mit dessen Hilfe die Dynamik der Dampferzeugung mit ausreichender Genauigkeit nachgebildet werden kann.

Auf der Basis einer vorgegebenen Modellstruktur wird in weiteren Ausführungsvarianten das erfindungsgemäße Online-Schätzverfahren für die beiden Modellparameter der Kesselzeitkonstanten und der Speicherzeitkonstanten durchgeführt.

Die Erfindung wird nachfolgend anhand eines in den Zeichnungen dargestellten Ausführungsbeispiels näher erläutert. Dabei zeigen:

Fig. 1A      ein Blockschaltbild zur Verdeutlichung der Dampferzeugung eines Kraftwerksblocks
Fig. 1B      ein Blockschaltbild einer Regelstrecke des Dampferzeugers
Fig. 2        eine Skizze zur Erläuterung der vergleichenden Schätzung
Fig. 3        eine schematische Darstellung der Regeleinrichtung

Figur 1 dient der Verdeutlichung des dynamischen Prozesses der Dampferzeugung und der Erklärung der beiden Modellparameter der Kesselzeitkonstanten TDE und der Speicherzeitkonstanten TSP.

In Fig. 1A ist in vereinfachter Form das Blockschaltbild eines Dampferzeugers dargestellt. Dem Brennraum des Kessels K wird an seinem Eingang der Brennstoff BR zugeführt, wobei es sich beispielsweise um in Kohlemühlen zu Kohlestaub gemahlene Kohle handeln kann. Der Massenstrom des Brennstoffs $\dot{m}_{BR}$ kann an dieser Stelle gemessen werden. Die entsprechende Wärmeleistung $\dot{Q}_{BR}$ des Brennstoffs entspricht dem um den Heizwert HW des Brennstoffs korrigierten Massenstrom. Der Brennstoff wird innerhalb des Kessels K verbrannt. Zur Dampferzeugung wird in der Dampferzeugerwand in Rohren geführtes Speisewasser erhitzt und verdampft. Dieser Dampf wird durch das Rohrsystem des Überhitzers Ü auf das Turbinenventil TV geleitet. Der Gesamtprozess der Dampferzeugung $DE_{ges}$ wird idealisiert in zwei Teilprozesse aufgeteilt: die eigentliche Dampferzeugung DE und die Dampfspeicherung SP, wo der zuvor erzeugte Dampf gesammelt und gespeichert wird. Der Dampfspeicher SP ist hier nur zur Verdeutlichung der Modellvorstellung eingezeichnet und entspricht dem Gesamtvolumen aller Rohrleitungen des Dampferzeugers. Am Ausgang des Dampferzeugers $DE_{ges}$ wird der Frischdampfmassenstrom $\dot{m}_{FD}$ entnommen und der Dampfdruck $p_D$ gemessen. Der Turbinenmassenstrom $m_T$ ist gleich dem Frischdampfmassenstrom $\dot{m}_{FD}$, der sich hinter dem Dampferzeuger einstellt.

Fig. 1B zeigt eine mögliche Variante für das regelungstechnische Strukturmodell eines Dampferzeugers. Die zeitveränderlichen Größen sowie Funktionalbeziehungen sind durch geeignete graphische Symbole veranschaulicht und zu einem Strukturbild zusammengefügt.

Als Eingangsgröße wird dem Dampferzeuger, der in der Zeichnung durch die Regelstrecke $DE_{ges}$ repräsentiert ist, der Brennstoffmassenstrom $\dot{m}_{BR}$ zugeführt. Der unterschiedliche Heizwert des Brennstoffs wird im Strukturmodell durch ein Verstärkungsglied HW berücksichtigt.

Außerdem besitzt jede Verbrennung und damit auch die Dampferzeugung einen unterschiedlichen Wirkungsgrad, was in Fig. 1B als eigener Block $\eta_{DE}$ dargestellt ist. Diese Faktoren sind aus regelungstechnischer Sicht als Faktoren zu berücksichtigen, mit denen die Eingangsgröße des Brennstoffmassenstroms $\dot{m}_{BR}$ multipliziert wird.

Die Dynamik des Dampferzeugungsprozesses wird bei dieser Modellbetrachtung in zwei Teilsysteme untergliedert: die eigentliche Dampferzeugung und den Dampfspeicher. Der Teilprozess des Dampferzeugers kann erfahrungsgemäß regelungstechnisch durch ein idealisiertes Streckenmodell dritter Ordnung mit drei gleichen Zeitkonstanten TDE [s] beschrieben werden. Dies bedeutet, dass bei einer sprunghaften Änderung des Brennstoffmassenstroms und bei konstantem Druck sich eine Verzögerung des Turbinenmassenstroms einstellt, die der Antwort eines Systems auf ein pT3-Glied entspricht. Die Kesselzeitkonstante TDE beschreibt daher die Verzögerung zwischen Brennstoffmassenstrom $\dot{m}_{BR}$ und Dampfmassenstrom am Kesselaustritt $\dot{m}_{DE}$, und charakterisiert damit das dynamische Verhalten von Kohlemühle, Verbrennung und eigentlicher Dampferzeugung.

Dem Teilprozess des Dampfspeichers liegt die Modellvorstellung eines örtlich konzentrierten Speichers zugrunde, bei dem die im gesamten Dampferzeuger z.B. in Rohrleitungen verteilte Massenspeicherung im Dampfvolumen zusammengefasst wird. Die Größe des vorhandenen Dampfspeichers wird durch die Speicherzeitkonstante TSP erfasst.

Am Ausgang der Gesamtdampferzeugung $DE_{ges}$ wird ein Turbinendampfmassenstrom $m_T$ entnommen und zur Turbine geführt. Die Entnahme eines Dampfvolumens wird in Fig. 1B anhand des Subtraktionsglied SUB, welches dem Dampfspeicher SP vorgeschaltet ist, verdeutlicht. Die aufintegrierte Differenz zwischen den beiden Massenströmen $\dot{m}_{DE}$ und $m_T$ ist proportional zum Dampfdruck $p_D$ im Dampfspeicher SP, und dieser ist im Gegensatz zum Dampferzeugermassenstrom $\dot{m}_{DE}$ eine messbare Größe. In dem hier vorgegebenen Strukturmodell ist zur Durchführung der Integration ein Integrationsglied dargestellt. Die Integrations-Zeitkonstante des Dampfkessels entspricht der Speicherzeitkonstante TSP.

Das Strom erzeugende Teilsystem, umfassend Turbine und Generator, ist nicht Teil der Regelstrecke und ist daher nicht dargestellt. Allerdings ist die Stellgröße der Ventilstellung $y_T$ des Turbineneingangsventils, über welche der Dampffluss zur Turbine gesteuert wird eine entscheidende Größe, da durch sie der Turbinendampfmassenstrom geregelt wird. Eine sprunghafte Änderung des Turbinenventils bei konstantem Brennstoffmassenstrom $\dot{m}_{BR}$ und daher auch konstantem Dampferzeugermassenstrom $\dot{m}_{DE}$, wirkt sich ebenfalls auf den Dampfdruck $p_D$ aus. Eine Erhöhung des Turbinendampfmassenstroms mT durch das Öffnen des Turbinenventils TV führt zu einer Verringerung des Dampfdrucks. Aus der zeitlichen Änderung des Dampfdrucks bei konstantem Dampferzeugermassenstrom $\dot{m}_{DE}$ und Turbinenventilstellung yT lässt sich die Speicherzeitkonstante TSP [%/bar s] berechnen.

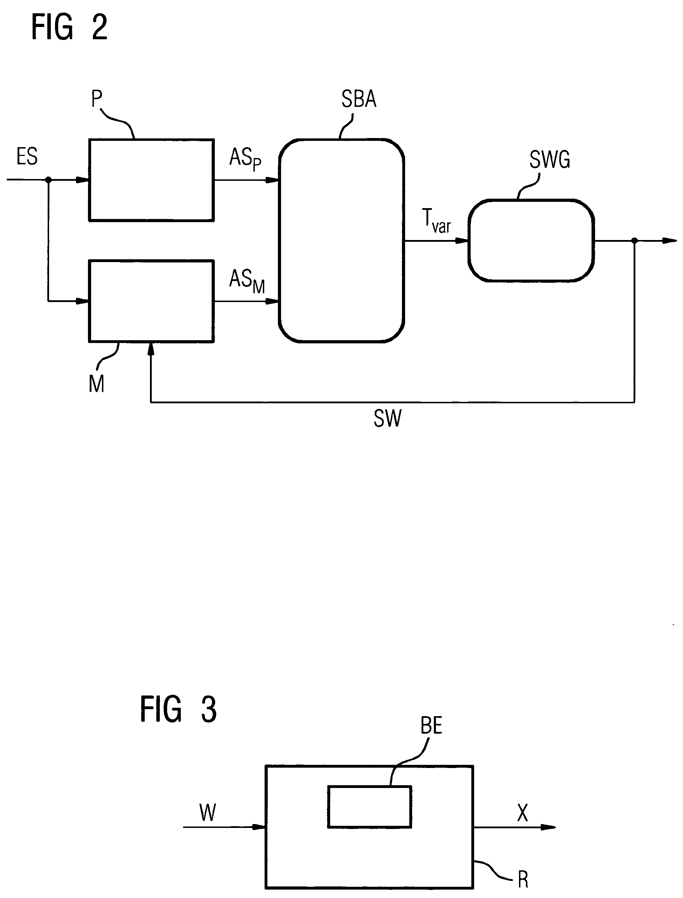

Im Folgenden soll das erfindungsgemäße Schätzverfahren näher beschrieben werden. Hierzu wird zur Veranschaulichung das in Fig. 1B dargestellte Modell verwendet und als Beispiel werden die Modellparameter der Kesselzeitkonstanten TDE und der Speicherzeitkonstanten TSP geschätzt. Das Verfahren ist jedoch mit entsprechenden Modifikationen auch auf einen einzelnen Modellparameter oder auf mehr als zwei Modellparameter anwendbar. Auch andere Modellparameter wie beispielsweise Verstärkungsfaktoren können auf diese Weise bestimmt werden. Anhand von Fig. 2 soll die wesentliche Vorgehensweise bei der Online-Parameterschätzung verdeutlicht werden. Parallel zum realen Dampferzeugungsprozess P wird ein Vergleichsmodell oder Simulationsmodell M benötigt, um einen oder mehrere unbekannte Modellparameter (in dem betrachteten Ausführungsbeispiel die Zeitkonstanten) zu ermitteln. Wird sowohl dem realen Prozess P als auch dem Modell des Dampferzeugers M dasselbe Eingangssignal ES aufgeschaltet, so können anhand der Ausgangssignale des Prozesses ASP (Prozessmessdaten) und des Simulationsmodells ASM (Simulationsergebnisse) Aussagen über die Größenverhältnisse der Zeitkonstanten getroffen werden. Durch eine vergleichende Auswertung der Signale wird demnach in einem ersten Schritt eine Schätzbarkeitsanalyse SBA durchgeführt. Dabei wird zumindest ein Ausgangssignal jeweils des Prozesses ASP und/oder des Modells ASM oder zumindest ein Eingangssignal ES anhand einer Gradientenanalyse verarbeitet. Anhand der Gradientenanalyse werden Schätzbereiche definiert, innerhalb derer eine gültige Parameterschätzung möglich ist. Wird die Schätzbarkeit positiv beurteilt, wird in einem nächsten Schritt dann ein aktueller Schätzwert für die Zeitkonstanten verbessert und dem Modell zurückgekoppelt. Dies ist in Fig. 2 durch den Schätzwertgenerator SWG veranschaulicht, welcher die Schätzwerte SW auch an das Modell M ausgibt. Dadurch wird eine iterative Approximation der Zeitkonstanten von Modell und realem Prozess erreicht.

Bei diesem qualitativen Verfahren stellt eine hinreichend starke Anregung des Prozesses eine Voraussetzung für die Schätzbarkeit dar. Damit eine gültige Parameterschätzung überhaupt möglich ist, darf sich der Dampferzeugerprozess nicht in einem stationären Zustand befinden. Nur für transiente Prozessdaten ist die Information über das dynamische Zeitverhalten und damit auch die Information über die Zeitkonstanten des Prozesses enthalten. Für annähernd konstante Messsignale kann keine sinnvolle Parameterschätzung durchgeführt werden. Da es sich um ein Online-Verfahren handelt, muss also zu jeder Zeit entschieden werden, ob gültige Anregungsbedingungen vorliegen oder nicht.

Die Beurteilung der Schätzbarkeit der Zeitkonstanten wird durch die Schätzbarkeitsanalyse SBA vorgenommen. Im Falle des Dampferzeugers werden hierzu die relevanten Systemgrößen, die Messsignale Wärmeleistung $\dot{Q}_{BR}$, Dampfdruck $p_D$ und Frischdampfmassenstrom $\dot{m}_{FD}$ betrachtet. Um gültige Anregungsbedingungen zu erhalten müssen die Gradienten dieser relevanten Messsignale ermittelt und analysiert werden. Die Gradientenanalyse erfolgt dadurch, dass zumindest die erste Ableitung einer Prozessgröße des realen Prozesses betrachtet wird. Die Ableitungen der Systemgrößen werden mittels einer DT1-Differentiator-Schaltung ermittelt. Anhand der auf diese Weise erzeugten Ableitungen werden dann jeweils Freigabe-Bedingungen für die Schätzung der Zeitkonstanten definiert.

Die in Fig. 2 schematisch skizzierte Vorgehensweise zur Online-Schätzung von zumindest einem Modellparameter, welche hier im Rahmen der parallelen Online-Schätzung der beiden charakteristischen Zeitkonstanten des Dampferzeugers diskutiert wird, kann regelungstechnisch auf unterschiedliche Art und Weise realisiert werden.

Eine mögliche Realisierung soll an dieser Stelle als spezielles Ausführungsbeispiel vorgestellt werden. Das hier skizzierte Ausführungsbeispiel ist nicht als Einschränkung der Erfindung zu verstehen. Vielmehr sind im Rahmen der vorliegenden Offenbarung zahlreiche Abänderungen und Modifikationen möglich.

Dieser nun folgende spezielle Ansatz beruht auf der Erkenntnis, dass eine qualitative Abschätzung der Zeitkonstanten intuitiv durch graphische Auswertung der Antwort eines Verzögerungsglieds auf eine ausreichend große Anregung möglich ist. Werden beispielsweise die Sprungantworten verschiedener PT1-Glieder nach identischer Anregung betrachtet, so kann aus dem Vergleich der Antwortgraphen eine Aussage über das Größenverhältnis der Zeitkonstanten getroffen werden. Ist eine der Zeitkonstanten bekannt, kann daraus eine Abschätzung für die anderen Zeitkonstanten abgeleitet werden. Diese Methode lässt sich auch auf PT3-Glieder ausweiten, allerdings muss deren abweichendes Zeitverhalten berücksichtigt werden. Die Interpretation der Steigung der Antwortgraphen ist dann abhängig von der Lage des untersuchten Punktes im Kurvenverlauf. Entscheidend ist die relative Position im Bezug auf den Wendepunkt. Demzufolge können über eine Gradientenanalyse der Antwortgraphen von Übertragungsgliedern qualitative Aussagen über deren Zeitkonstanten getroffen werden.

Wird dieser spezielle Ansatz verfolgt, so gilt:

a) Die Analyse der Schätzbarkeit der Speicherzeitkonstanten TSP erfolgt durch eine Analyse des Gradienten des Frischdampfdruckes $p_D$ unter Verwendung des aktuellen Schätzwertes für die Kesselzeitkonstante.

Aus dem Dampfdruck $p_D$ sowie dem modellierten Dampfdruck werden mit dem beschriebenen Verfahren die Ableitungen bestimmt. Für eine Freigabe der Schätzung von TSP muss folgende logische Bedingung für den Prozess, als auch für das Modell erfüllt sein:

$$\left\{ \left( \dot{p}_D > \dot{p}_{\min} \right) \wedge \left( \ddot{p}_D > \ddot{p}_{\min} \right) \right\} \vee \left\{ \left( \dot{p}_D < -\dot{p}_{\min} \right) \wedge \left( \ddot{p}_D < -\ddot{p}_{\min} \right) \right\}$$

Darin sind $\dot{p}_{\min}$ und $\dot{p}_{\min}$ fallweise einstellbare Werte.

Dadurch wird sichergestellt, dass sich Prozess und Modell in einem gültigen Zustand befinden, also dass eine ausreichende Anregung vorliegt und Prozess und Modell ein synchrones Ausgangsverhalten aufweisen.

b) Die Analyse der Schätzbarkeit der Kesselzeitkonstanten TDE erfolgt durch eine Analyse des Gradienten für Dampfmassenstrom am Kesselaustritt $\dot{m}_{DE}$. Dieser wird für den realen Prozess aus der Ableitung des realen Frischdampfdrucks $p_D$ unter Verwendung des aktuellen Schätzwertes für die Speicherzeitkonstante $TSP_{aktuell}$ ermittelt. Aus dem zurückgerechneten Prozess-Dampfmassenstrom $\dot{m}_{DE}$ und dem zurückgerechneten modellierten Dampfmassenstrom $\dot{m}_{DE}$ werden wieder über DT1-Glieder die Ableitungen bestimmt. Die folgende logische Bedingung muss für eine Freigabe der Schätzung TDE für Prozess und Modell erfüllt sein.

$$\left\{ \left( \dot{m}_{DE} > \dot{m}_{\min} \right) \vee \left( \dot{m}_{DE} < -\dot{m}_{\min} \right) \right\} \wedge \left\{ \left( \ddot{m}_{DE} < -\ddot{m}_{\min} \right) \vee \left( \ddot{m}_{DE} > \ddot{m}_{\min} \right) \right\}$$

Darin sind $\dot{m}_{\min}$ und $\ddot{m}_{\min}$ fallweise einstellbare Werte.

Sind die o.a. Schätzbarkeitsbereiche festgelegt, so wird in einem nächsten Schritt ein Schätzwert für den gesuchten Modellparameter generiert. Dazu muss von der Schätzwertanalyse SWA ein Korrekturwert $T_{var}$ erzeugt werden, der eine Anpassung des aktuellen Schätzwertes in die richtige Richtung initiiert.

Eine denkbare Möglichkeit wäre die Ausgabe eines vorzeichenbehafteten Fixwerts, z.B. $T_{var} = \pm 1$. Sinnvoller ist jedoch eine gewichtete Ausgabe, die in Abhängigkeit von der Güte des aktuellen Schätzwerts skaliert. Liegt bereits ein guter Schätzwert vor, soll ein gedämpftes Schätzverhalten bewirkt werden. Bei einem stark abweichenden Schätzwert soll dagegen eine schnelle Anpassung stattfinden. Ein solches Signal $T_{var}$ bewirkt also bei idealer Anregung, dass der Schätzfehler asymptotisch zu null wird.

Steht der Korrekturwert fest, so wird dieser auf den Schätzwertgenerator SWG aufgeschaltet. Dieser kann als freilaufender Integrator ausgestaltet sein. Ist die Schätzfreigabe wie oben beschrieben erfolgt, kann durch das Anlegen eines positiven oder negativen Eingangs an den Integrator der Schätzwert nach oben oder unten korrigiert werden. Die Zeitkonstanten T typischer Dampferzeuger liegen im Bereich 30s < T < 120s. Ein zusätzlicher Einstellparameter des Integrators ermöglicht beispielsweise die manuelle Justierung der Empfindlichkeit des Integriererverhaltens.

Dieses spezielle Schätzverfahren realisiert demnach die Approximation von Modellparametern durch einen dynamischen Vergleich von Messungen aus einem Prozess und den Simulationsgrößen einer parallel geschalteten Modellstrecke, deren Modellparameter (hier Zeitkonstanten) kontinuierlich mit den aktuellen Schätzwerten angepasst werden.

Fig. 3 zeigt das Strukturbild einer Regeleinrichtung R. Der Regeleinrichtung wird die Führungsgröße w zugeführt. Am Ausgang der Regeleinrichtung wird die Regelgröße x ausgegeben. Teil der Regeleinrichtung ist eine oder mehrere Berechnungseinheiten BE, in denen die Parameterschätzung für die Regelung des Dampferzeugers online gemäß des erfindungsgemäßen Verfahrens berechnet wird.

**Patentansprüche**

1.  Verfahren zur Ermittlung von zumindest einem Modellparameter eines regelungstechnischen Modells eines Dampferzeugers, wobei für den Dampferzeuger eine regelungstechnische Modellstruktur mit dem zumindest einen charakteristischen Modellparameter vorgegeben wird, und online Messsignale des Dampferzeugungsprozesses aufgenommen werden,
    **dadurch gekennzeichnet,**
    **dass** der zumindest eine Modellparameter online geschätzt wird,
    indem die folgenden Schritte durchgeführt werden:

    a) sowohl dem realen Prozess (P) als auch dem Modell (M) des Dampferzeugers wird dasselbe Eingangssignal (ES) aufgeschaltet,
    b) es wird eine Schätzbarkeitsanalyse (SBA) durchgeführt, wobei zumindest ein Ausgangssignal jeweils des Prozesses (ASP) und/oder des Modells (ASM) oder zumindest ein Eingangssignal (ES) durch eine vergleichende Auswertung anhand einer Gradientenanalyse verarbeitet wird,
    c) anhand der Gradientenanalyse werden Schätzbereiche definiert, innerhalb derer eine gültige Parameterschätzung möglich ist,
    d) wird die Schätzbarkeit positiv beurteilt, wird der aktuelle Schätzwert des zumindest einen Modellparameters verbessert
    e) die Schritte a) bis d) werden in einem iterativen Verfahren wiederholt.

2.  Verfahren nach Anspruch 1,
    **dadurch gekennzeichnet,**
    **dass** der Korrekturwert für den aktuellen Schätzwert aus der Analyse des zeitlichen Verlaufs von Prozess- und Modellgrößen gebildet wird.

3.  Verfahren nach Anspruch 1 oder 2,
    **dadurch gekennzeichnet,**
    **dass** Maximalwerte der Gradienten in einer Offline-Simulation ermittelt werden.

4.  Verfahren nach einem der vorhergehenden Ansprüche,
    **dadurch gekennzeichnet,**
    **dass** Maximalwerte der Gradienten während des Online-Betriebs mit Hilfe linearer Gleichungen aus den aktuellen Schätzwerten für den zumindest einem Modellparameter des regelungstechnischen Modells ermittelt werden.

5.  Verfahren nach einem der vorhergehenden Ansprüche,
    **dadurch gekennzeichnet,**
    **dass** die Gradienten mit Hilfe von DT-Gliedern mit niedriger Zeitkonstante bestimmt werden und/oder die Anpassung des zumindest einen Modellparameters mit Hilfe eines Integrators eine Variation der Zahlenwerte solange durchgeführt wird, wie eine Abweichung der betrachteten Gradienten ansteht.

**6.** Verfahren nach einem der Ansprüche 1 bis 5,
**dadurch gekennzeichnet,**
**dass** die Dampferzeugung mindestens durch ein Verzögerungsglied N-ter Ordnung (VZN) mit einer charakteristischen Kesselzeitkonstanten (TDE) und mindestens einen nachgeschalteten Integrator (I) mit einer charakteristischen Speicherzeitkonstanten (TSP) modelliert wird.

**7.** Verfahren nach Anspruch 6,
**dadurch gekennzeichnet,**
**dass** die regelungstechnische Modellstruktur derart ausgelegt ist,
**dass** dem mindestens einen Verzögerungsglied N-ter Ordnung (VZN) ein Brennstoffmassenstrom ($m_{BR}$) als Eingangsgröße zugeführt und als Ausgangsgröße ein Kesseldampfmassenstrom (mDE) abgeführt wird,
**dass** hinter dem mindestens einen Verzögerungsglied N-ter Ordnung (VZN) mindestens ein Subtraktionsglied (SUB) angeordnet ist, in welchem von dem Kesseldampfmassenstrom ($m_{DE}$) ein Turbinendampfmassenstrom ($m_T$) subtrahiert wird und anschließend die Differenz aus diesen Massenströmen ($m_{DE}$, $m_T$) dem mindestens einen Integrator (I) zugeführt wird, dessen Ausgangsgröße einen Frischdampfdruck ($p_D$) repräsentiert,
wobei der Brennstoffmassenstrom ($m_{BR}$), der Frischdampfdruck ($p_D$) und der Turbinendampfmassenstroms ($m_T$) online als Messwerte ermittelt werden.

**8.** Verfahren nach Anspruch 6 oder 7,
**dadurch gekennzeichnet,**
**dass** bei der Online-Schätzung der charakteristischen Modellparameter der Kesselzeitkonstanten (TDE) und der Speicherzeitkonstanten (TSP)
die Schätzbarkeitsanalyse anhand der aufgenommenen Messwerte ($m_{BR}$, $p_D$, $m_T$) und mindestens deren ersten Ableitungen nach der Zeit durchgeführt wird, wobei

- die Beurteilung eines aktuellen Schätzwertes für die Speicherzeitkonstante (TSP) durch eine Analyse des Gradienten des Frischdampfdrucks ($p_D$) unter Verwendung eines aktuellen Schätzwertes für die Kesselzeitkonstante (TDE) erfolgt und
- die Beurteilung eines aktuellen Schätzwertes für die Kesselzeitkonstante (TDE) durch eine Analyse des Gradienten des Frischdampfmassenstroms ($m_{DE}$) am Kesselaustritt erfolgt, wobei dieser anhand der Messwerte des Frischdampfdrucks ($p_P$) und des Turbinendampfmassenstroms ($m_T$) aus dem realen Prozess und unter Berücksichtigung eines aktuellen Schätzwertes für die Speicherzeitkonstante (TSP) zurückgerechnet wird.

**9.** Verfahren nach Anspruch 8,
**dadurch gekennzeichnet,**
**dass** der Korrekturwert für den aktuellen Schätzwert aus der Differenz von Prozessgradient und Modellgradient gebildet wird und mit einem Vorzeichenfaktor multipliziert wird.

**10.** Vorrichtung zur Ermittlung von zumindest einem Modellparameter eines regelungstechnischen Modells eines Dampferzeugers, aufweisend mindestens eine Berechnungseinheit eingerichtet zur Durchführung des Verfahrens nach einem der Ansprüche 1 bis 9.

**11.** Regeleinrichtung (R) für einen Dampferzeuger, welche eine Regelstrecke basierend auf einer regelungstechnischen Modellstruktur mit zumindest einem Modellparameter und eine Vorrichtung zur Ermittlung von zumindest einem Modellparameter eines regelungstechnischen Modells eines Dampferzeugers, die nach Anspruch 10 ausgebildet ist, aufweist.

**12.** Computerprogrammprodukt, das in den Speicher eines Computers geladen wird und Softwarecodeabschnitte umfasst, mit denen die Schritte gemäß einem der Ansprüche 1 bis 9 ausgeführt werden, wenn das Produkt auf einem Computer läuft.

**Claims**

**1.** Method for determining at least one model parameter of a control engineering model of a steam generator, a control engineering model structure with the at least one characteristic model parameter being prescribed for the steam generator, and online measurement signals of the steam generating process being recorded, **characterized in that** the at least one model parameter is estimated online by carrying out the following steps:

a) the same input signal (ES) is applied both to the real process (P) and to the model (M) of the steam generator,

b) an estimability analysis (SBA) is carried out, at least one output signal of the process (ASP) and/or of the model (ASM) respectively, or at least one input signal (ES) being processed by means of a comparative evaluation with the aid of a gradient analysis,

c) the gradient analysis is used to define estimation ranges within which a valid parameter estimation is possible,

d) if the estimability is positively assessed, the current estimate of the at least one model parameter is improved, and

e) steps a) to d) are repeated in an iterative method.

2. Method according to Claim 1, **characterized in that** the correction value for the current estimate is formed from the analysis of the time profile of process and model variables.

3. Method according to Claim 1 or 2, **characterized in that** gradient maxima are determined in an offline simulation.

4. Method according to one of the preceding claims, **characterized in that** gradient maxima are determined during the online operation with the aid of linear equations from the current estimates for the at least one model parameter of the control engineering model.

5. Method according to one of the preceding claims, **characterized in that** the gradients are determined with the aid of PT elements with low time constant, and/or the matching of the at least one model parameter is carried out with the aid of an integrator and the numerical values are varied until there is a deviation in the observed gradients.

6. Method according to one of Claims 1 to 5, **characterized in that** the steam generation is modeled at least by an Nth-order delay element (VZN) with a characteristic boiler time constant (TDE), and by at least one downstream integrator (I) with a characteristic storage time constant (TSP).

7. Method according to Claim 6, **characterized in that** the control engineering model structure is designed in such a way that the at least one Nth-order delay element (VZN) is fed a fuel mass flow ($m_{BR}$) as input variable, and a boiler steam mass flow (mDE) is ruled as output variable, and

that there is arranged downstream of the at least one Nth-order delay element (VZN) at least one subtractor (SUB) in which a turbine steam mass flow ($m_T$) is subtracted from the boiler steam mass flow ($m_{DE}$), and the difference of these mass flows ($m_{DE}$, $m_T$) is subsequently fed to the at least one integrator (I), of which the output variable represents a fresh steam pressure ($p_D$), the fuel mass flow ($m_{BR}$), the fresh steam pressure ($p_D$) and the turbine steam mass flow ($m_T$) being determined online as measured values.

8. Method according to Claim 6 or 7, **characterized in that** during the online estimation of the characteristic model parameters of the boiler time constant (TDE) and the storage time constant (TSP), the estimability analysis is carried out with the aid of the recorded measured values ($m_{BR}$, $p_D$, $m_T$) and at least their first derivatives with respect to time,

- the assessment of a current estimate for the storage time constant (TSP) being performed by analyzing the gradient of the fresh steam pressure ($p_D$) with the use of a current estimate for the boiler time constant (TDE), and

- the assessment of a current estimate for the boiler time constant (TDE) being performed by analyzing the gradient of the fresh steam mass flow ($m_{DE}$) at the boiler outlet, said gradient being back calculated with the aid of the measured values of the fresh steam pressure ($p_P$) and of the turbine steam mass flow ($m_T$) from the real process and taking account of a current estimate for the storage time constant (TSP).

9. Method according to Claim 8, **characterized in that** the correction value for the current estimate is formed from the difference of process gradient and model gradient, and is multiplied by a sign factor.

10. Device for determining at least one model parameter of a control engineering model of a steam generator, having at least one calculation unit set up for carrying out the method according to one of Claims 1 to 9.

11. Control unit (R) for a steam generator, which has a controlled system based on a control engineering model structure with at least one model parameter, and a device for determining at least one model parameter of a control engineering model of a steam generator, which is designed according to Claim 10.

12. Computer program product that is loaded into the memory of a computer and comprises software code sections with the aid of which the steps are executed in accordance with one of Claims 1 to 9 when the product runs on a computer.

**Revendications**

1. Procédé de détermination d'au moins un paramètre d'un modèle de technique de régulation d'un générateur de vapeur, dans lequel on prescrit pour le générateur de vapeur une structure du modèle de technique de régulation ayant le au moins un paramètre du modèle caractéristique et on enregistre en ligne des signaux de mesure du processus de production de vapeur,
   **caractérisé en ce que** l'on estime en ligne le au moins un paramètre du modèle,
   en effectuant les stades suivants :

   a ) on applique le même signal ( ES ) d'entrée à la fois au processus ( P ) réel et au modèle ( M ) du générateur de vapeur,
   b ) on effectue une analyse ( SBA ) d'estimabilité, en traitant au moins un signal de sortie respectivement du processus ( ASP ) et/ou du modèle ( ASM ) ou au moins un signal ( ES ) d'entrée par une évaluation comparative à l'aide d'une analyse de gradient,
   c ) à l'aide de l'analyse de gradient, on définit des plages d'estimation dans lesquelles une estimation valable de paramètre est possible,
   d ) si l'on juge l'estimabilité positive, on améliore la valeur d'estimation instantanée du au moins un paramètre du modèle,
   e ) on répète les stades a ) à d ) par un procédé d'itération.

2. Procédé suivant la revendication 1,
   **caractérisé en ce que** l'on forme la valeur de correction de la valeur d'estimation instantanée à partir de l'analyse de la courbe dans le temps de grandeurs du processus et de grandeurs du modèle.

3. Procédé suivant la revendication 1 ou 2,
   **caractérisé en ce que** l'on détermine des valeurs maximum des gradients dans une simulation en ligne.

4. Procédé suivant l'une des revendications précédentes,
   **caractérisé en ce que**
   l'on détermine les valeurs maximum des gradients pendant le fonctionnement en ligne à l'aide d'équations linéaires à partir des valeurs d'estimation instantanées pour le au moins un paramètre du modèle de la technique de régulation.

5. Procédé suivant l'une des revendications précédentes,
   **caractérisé en ce que**
   l'on détermine des gradients à l'aide d'éléments DT ayant une constante de temps petite et/ou l'on effectue l'adaptation du au moins un paramètre du modèle à l'aide d'un intégrateur, une variation des valeurs numériques étant effectuées tant qu'il y a un écart entre les gradients considérés.

6. Procédé suivant l'une des revendications 1 à 5,
   **caractérisé en ce que**
   l'on modélise la production de vapeur au moins par un élément de temporisation d'ordre N ( VZN ) ayant une constante de temps de chaudière ( TDE ) caractéristique et par au moins un intégrateur ( I ) en aval ayant une constante de temps d'accumulateur caractéristique.

7. Procédé suivant la revendication 6,
   **caractérisé en ce que**
   la structure du modèle de technique de régulation est conçue, de manière à envoyer comme grandeur d'entrée un courant ( $m_{BR}$ ) de combustible au au moins un élément de temporisation d'ordre N ( VZN ), et à retirer comme grandeur de sortie un courant ( $m_{DE}$ ) massique de vapeur de chaudière,
   **en ce que**, derrière le au moins un élément de temporisation d'ordre N ( VZN ), on met au moins un élément ( SUB ) de soustraction, dans lequel on soustrait un courant ( $m_T$ ) massique de vapeur de turbine du courant ( $m_{DE}$ ) massique de vapeur de chaudière et on envoie ensuite la différence entre ces courants ( $m_{DE}$, $m_T$ ) massiques au au moins un intégrateur ( I ) dont la grandeur de sortie représente une pression ( $p_D$ ) de vapeur vive,
   le courant ( $m_{BR}$ ) massique de combustible, la pression ( $p_D$ ) de vapeur vive et le courant ( $m_T$ ) massique de vapeur de turbine étant déterminés comme valeurs de mesure en ligne.

**8.** Procédé suivant la revendication 6 ou 7,
en ce que, dans l'estimation en ligne des paramètres du modèle caractéristiques, de la constante ( TDE ) de temps de chaudière et de la constante ( TSP ) de temps d'accumulateur, on effectue l'analyse de l'estimabilité à l'aide des valeurs ( $m_{BR}$, $p_D$, $m_T$ ) de mesure enregistrées et au moins de leurs dérivées premières en fonction du temps dans lequel

- on juge d'une valeur d'estimation instantanée de la constante ( TSP ) de temps d'accumulateur par une analyse du gradient de la pression ( $p_D$ ) de vapeur vive, en utilisant une valeur d'estimation instantanée pour la constante ( TDE ) de temps de chaudière et
- on juge d'une valeur d'estimation instantanée de la constante ( TDE ) de temps de chaudière par une analyse du gradient du courant ( $m_{DE}$ ) massique de vapeur vive à la sortie de la chaudière, celle-ci étant recalculée au moyen des valeurs de mesure de la pression ( $p_p$ ) de vapeur vive et du courant ( $m_T$ ) massique de vapeur de turbine à partir du processus réel et en tenant compte d'une valeur d'estimation instantanée de la constante ( TSP ) de temps d'accumulateur.

**9.** Procédé suivant la revendication 8,
en ce qu'on forme la valeur de correction de la valeur d'estimation instantanée à partir de la différence entre le gradient de processus et le gradient de modèle et on la multiplie par un facteur de signe.

**10.** Dispositif de détermination d'au moins un paramètre d'un modèle de technique de régulation d'un générateur de vapeur, ayant au moins une unité de calcul conçue pour effectuer le procédé suivant l'une des revendications 1 à 9.

**11.** Dispositif ( R ) de régulation d'un générateur de vapeur, qui a une section de régulation reposant sur une structure de modèle de technique de régulation, ayant au moins un paramètre de modèle et un dispositif de détermination d'au moins un paramètre d'un modèle de technique de régulation d'un générateur de vapeur, qui est constitué suivant la revendication 10.

**12.** Produit de programme d'ordinateur, qui est chargé dans la mémoire d'un ordinateur et qui comprend des parties de code logiciel, par lesquelles les stades suivant l'une des revendications 1 à 9 sont exécutés lorsque le produit passe sur un ordinateur.

# FIG 1A

FIG 1B

FIG 2

ES → [P] → AS$_P$ → [SBA] → T$_{var}$ → [SWG] → X

AS$_M$ ← [M]

SW

FIG 3

W → [R [BE]] → X

**IN DER BESCHREIBUNG AUFGEFÜHRTE DOKUMENTE**

**In der Beschreibung aufgeführte Patentdokumente**

- EP 2007061170 W